# DEMANDE DE BREVET EUROPEEN

(11) **EP 3 259 983 A1**
(43) Date de publication de la demande: **27.12.2017**
(21) Numéro de dépôt: 17177066.2
(22) Date de dépôt: 21.06.2017
(51) Int. Cl.: A01G 17/06, B21F 9/00

(54) **DISPOSITIF DE MAINTIEN ET SUPPORT POUR PIEDS DE VIGNE**

(30) Priorité: 21.06.2016 BE 201605455
(71) Demandeur: Strée, Robert, 4190 Ferrières (BE)
(72) Inventeur: Strée, Robert, 4190 Ferrières (BE)
(74) Mandataire: Pronovem

(57) **Abrégé**

Dispositif de maintien et support de pieds de vigne ou arbres fruitiers comprenant une structure longitudinale (11) et un ou plusieurs ensembles enrouleur (12) aptes à être déplacés verticalement le long de la structure longitudinale, chaque ensemble enrouleur (12) comprenant au moins une réserve de fil.

## Description

### Objet de l'invention

La présente invention se rapporte à un dispositif de maintien et de support de pieds de vigne ou arbres fruitiers à l'aide de fils placés le long d'une rangée de vignes ou arbres.

### Etat de la technique

Les pieds de vigne et autres arbres fruitiers sont habituellement disposés linéairement en rangées sur des parcelles aménagées à cet effet.

Pour les aider dans leur croissance et en particulier lors de la fructification et ceci jusqu'à la fin des vendanges ou récoltes, il est habituel d'envisager des moyens de maintien et support des vignes ou arbres.

Classiquement, on dispose de manière régulière le long des rangées, des piquets de préférence métalliques ou en bois entre lesquels courent parallèlement 1, 2, ou plusieurs fils. Avantageusement, ces fils sont des fils métalliques et de préférence en acier inoxydable.

Pour certains types de vigne, on envisage même que les fils soient appareillés par paire afin d'emprisonner la vigne ou une partie de l'arbre de part et d'autres. On peut également envisager de faire varier le diamètre des fils en fonction de l'utilisation particulière.

Les piquets présents aux extrémités des rangées sont appelés les piquets de tête et sont classiquement disposés de manière oblique afin de permettre d'assurer une certaine tension dans les fils.

Un problème récurrent se pose lors de la cassure de l'un des fils.

Un certain nombre de solutions techniques ont déjà été proposées pour résoudre cette problématique mais elles sont relativement coûteuses et nécessitent souvent un matériel spécial pour reconnecter le fil et assurer la tension adéquate dans ledit fil.

A titre d'exemple, on peut citer les documents WO 2011/131468, US 2013/118069 et FR 2011/650725.

Plus particulièrement, le document WO 2011/131468 décrit un dispositif assez complexe de tuteur pour vignes comprenant d'une part un piquet et d'autre part un système constitué de deux tendeurs permettant eux-mêmes de mettre sous tension les fils de retenue. Un déplacement vertical éventuellement à l'aide d'un élément rotatif des fils, dans des cavités de coulissement y est prévu. On y observe que le but de cet élément rotatif n'est pas à priori de prévoir une réserve de fils qui pourraient se présenter sous une forme d'accumulation importante. Cet élément ne peut faire donc fonction d'accumulateur avec une capacité importante de stockage. De plus, aucun moyen de blocage n'y est prévu.

Un autre problème réside dans le fait que les viticulteurs ont souvent tendance à trop tendre les fils de maintien et de support des pieds de vigne après chaque intervention lors du remplacement de ceux-ci. Une solution évidente serait d'obliger les viticulteurs à effectuer une mesure de la tension, par exemple à l'aide d'une clé dynamométrique. Il est bien entendu que c'est rarement possible dans les conditions réelles de travail.

### Buts de l'invention

La présente invention vise à fournir une solution au problème repris ci-dessus de raboutage d'un fil cassé et qui ne présente pas les inconvénients de l'état de l'art, et en particulier la nécessité d'avoir à disposition un matériel adéquat.

La présente invention se propose également de répondre aux exigences qui consistent à déplacer certaines des rangées de fils en fonction de la pousse de la vigne, en période de débourrement de la vigne.

La présente invention se propose également de donner la tension adéquate dans les fils et ceci sans nécessiter l'utilisation d'outils spécifiques ou de mise en oeuvre trop complexe.

La présente invention vise également à proposer l'utilisation de machines mécaniques conventionnelles de traitement de la vigne de manière à éviter tout accrochage, par exemple, lors de l'entrée dans le rang de vignes.

Selon un autre aspect, l'invention vise à proposer un système limiteur de tension des fils en vue de s'affranchir des soucis de réglage de la bonne tension des fils lors du placement ou de la réparation de ceux-ci.

### Résumé de l'invention

L'invention se rapporte à un dispositif tel que décrit dans les revendications annexées. L'invention se rapporte donc plus particulièrement à un dispositif de maintien et support de pieds de vigne ou arbres fruitiers comprenant une structure longitudinale et un ou plusieurs ensembles enrouleur aptes à être déplacés verticalement le long de la structure longitudinale, chaque ensemble enrouleur comprenant au moins une réserve de fil.

Chaque ensemble enrouleur comprend au moins les éléments suivants :
- un disque central, de préférence de forme hélicoïdale ou ovale,
- deux flasques se présentant sous la forme de roues crantées, disposées de part et d'autre du disque central, de manière à former un assemblage qui sert à recevoir une réserve de fil autour du disque central et de la maintenir en place par les flasques,
- un pivot servant d'axe de rotation audit assemblage,
- un cliquet de retenue de préférence muni d'un ressort, permettant le blocage et le déblocage de l'axe de rotation servant de pivot, par l'interaction entre le cliquet et les crans des flasques.

Selon une forme d'exécution, le pivot servant d'axe de rotation qui est de préférence un élément démontable, comprend un usinage à une extrémité qui permet au pivot de tourner, et un corps de forme polygonale correspondant à la forme d'une ouverture (usinée) dans l'assemblage du disque central et des flasques.

Selon une autre forme d'exécution, le pivot servant d'axe de rotation qui est de préférence un élément démontable comprend un orifice à une extrémité qui permet au pivot de tourner, et un corps de forme polygonale, et qui est pourvu d'un élément limiteur de tension monté entre le corps du pivot et l'ouverture dans l'assemblage du disque central et des flasques, l'élément limiteur de tension, ceux-ci étant configurés pour permettre au pivot d'actionner l'enroulement d'un fil sur le disque central jusqu'à ce que le fil atteigne une tension prédéfinie, et à empêcher la poursuite de l'enroulement au moment où ladite tension prédéfinie est atteinte.

De préférence, cet élément limiteur de tension comprend un cadre monté dans l'ouverture dans l'assemblage du disque central et des flasques, ledit cadre comprenant une ouverture centrale de forme essentiellement polygonale, les bords de l'ouverture étant formés par une pluralité de lamelles pliables vers l'extérieur du cadre, et dans lequel le corps de forme polygonale du pivot servant d'axe de rotation s'intègre dans l'ouverture essentiellement polygonale du cadre. Avantageusement, la forme polygonale du corps du pivot correspond essentiellement à la forme essentiellement polygonale du cadre, les dimensions étant légèrement supérieures pour le cadre.

De préférence, le dispositif limiteur de tension comprend une pluralité de pièces compressibles qui sont mises derrière les lamelles (vers l'extérieur) de telle sorte que le pliage vers l'extérieur des lamelles requiert la compression des pièces compressibles.

Selon une autre forme d'exécution, le cadre comprend un espace derrière chacune des lamelles et dans lequel les pièces compressibles sont calées entre les lamelles et les parois des espaces.

Avantageusement, les pièces compressibles sont réalisées en un matériau dont la dureté sera définie par la course que peut effectuer le pivot servant d'axe de rotation lors de la rotation de celui-ci.

Selon une autre forme d'exécution, le cadre est un cadre métallique qui comprend des lamelles ressorts qui, par exemple, peuvent être courbées sur elles-mêmes.

Selon une autre forme d'exécution, le cadre peut être découpé par laser et réalisé par injection en un matériau polymérique présentant une certaine souplesse tel que le Polyamide Ertalon ®.

Avantageusement, la longueur du pivot est inférieure à 8/10, de préférence à ¾ de la largeur du piquet. Ceci permet que lors du passage de machines mécaniques, elles n'accrochent pas le dispositif de maintien et de support de la vigne.

Selon une forme d'exécution, le disque central est pourvu d'une entaille qui permet d'insérer l'extrémité du fil.

Selon une forme d'exécution, chaque ensemble enrouleur comprend en outre au moins les éléments suivants :
- une plaque de support configurée en vue de permettre sa solidarisation amovible à la structure longitudinale,
- au moins deux plaques de corps solidarisées à la plaque de support et configurées pour supporter entre elles l'axe de rotation.

De préférence, les plaques de corps comprennent des boutonnières qui permettent de monter l'axe de rotation entres les plaques de corps.

Selon une forme d'exécution particulière, la structure longitudinale présente une partie creuse, apte à recevoir un ou plusieurs ensembles enrouleur, et la plaque de support présente une forme et des dimensions de manière à pouvoir coulisser au sein de la structure longitudinale.

Selon une forme d'exécution particulière, le cliquet de retenue comprend une barre longitudinale et deux bras transversaux, le premier bras transversal étant configuré pour pivoter au sein de deux ouvertures prévues à cet effet dans les plaques de corps, le deuxième bras transversal étant configuré pour être guidé dans deux orifices en forme d'arc circulaire, dans les plaques de corps, l'extrémité du cliquet étant conformée pour caler sur au moins un des crans des flasques.

Selon une forme d'exécution particulière, au moins un des ensembles enrouleur comprend un seul assemblage d'un disque central et deux flasques.

Selon une autre forme d'exécution particulière, au moins un des ensembles enrouleur comprend deux assemblages, chacun étant essentiellement constitué d'un disque central et deux flasques de sorte qu'un double pivot soit présent.

Avantageusement, la longueur du double pivot est inférieure à 8/10, de préférence à ¾ de la largeur du piquet.

### Brève description des figures

La figure 1 représente le dispositif selon la présente invention constituant le piquet de tête muni de trois ensembles enrouleurs.

La figure 2 représente des détails de la structure longitudinale du piquet selon une forme d'exécution préférée de l'invention.

Les figures 3a et 3b représentent respectivement une vue de profil et une vue éclatée d'un ensemble enrouleur destiné à équiper un piquet de tête selon une version simple pour une première forme d'exécution de l'invention.

La figure 4 représente une vue en détail de l'axe qui fait partie de l'ensemble enrouleur selon une forme d'exécution préférée de l'invention.

La figure 5 représente une vue en détail du cliquet de retenue qui fait partie de l'ensemble enrouleur selon une forme d'exécution préférée de l'invention.

La figure 6 représente une vue éclatée d'un ensemble enrouleur destiné à équiper un piquet de tête selon la présente invention, selon une version double pour une première forme d'exécution.

La figure 7 représente une vue éclatée d'un ensemble enrouleur selon une version simple pour une autre forme d'exécution qui comprend un dispositif limiteur de tension.

La figure 8 représente une vue éclatée d'un ensemble enrouleur selon une version double pour une autre forme d'exécution qui comprend un dispositif limiteur de tension.

La figure 9 représente les pièces supplémentaires destinées à réaliser le dispositif limiteur de tension pour les formes d'exécution décrites aux figures 7 et 8.

### Description détaillée de l'invention

Les modes de réalisation de la présente invention sont décrits maintenant de manière plus détaillée en référence aux figures jointes, l'invention n'y étant pas limitée, mais étant limitée uniquement par les revendications. Les dessins décrits sont uniquement schématiques et non limitatifs. Sur les dessins, la taille de certains éléments peut être exagérée et non dessinée à l'échelle à des fins illustratives. Les dimensions et les dimensions relatives ne correspondent pas nécessairement aux réductions réelles pour la pratique de l'invention. L'homme du métier peut reconnaitre que différentes variantes et modifications de la présente invention peuvent être englobées par sa portée. Par conséquent, la description des modes de réalisation préférés ne doit pas être considérée comme limitant la portée de la présente invention.

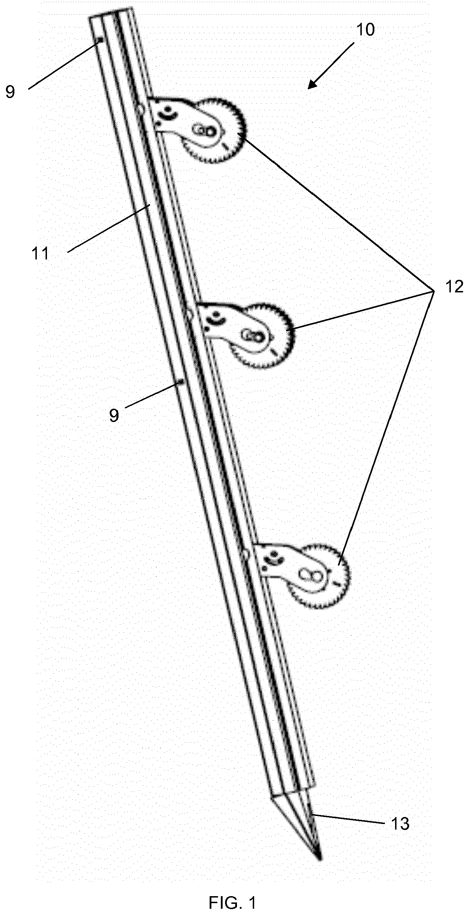

La figure 1 représente un piquet de tête, représenté par le repère 10, selon une forme d'exécution préférée de l'invention. Ce piquet est prévu pour être planté avec une inclinaison par rapport à la verticale, de préférence d'un angle de 10 à 15°. Avantageusement, deux orifices 9 sont prévus en partie arrière du piquet pour y fixer un amarrage (hauban) standard ou en V, pour maintenir la position inclinée du piquet.

Le piquet de tête 10 comprend une structure longitudinale essentiellement creuse 11 de préférence en un matériau métallique par exemple en acier ou en inox avec une forme spécifiquement conçue pour y faire coulisser à l'intérieur, un ou plusieurs ensembles enrouleur 12 de fils. La structure longitudinale 11 est de préférence pourvue d'une pointe renforcée 13 qui facilitera la pénétration dans les sols caillouteux. Les ensembles enrouleurs 12 peuvent être réglés à une hauteur adéquate et ceci sans l'intervention d'outils.

De préférence, en coupe, on observe que le piquet présente une section triangulaire.

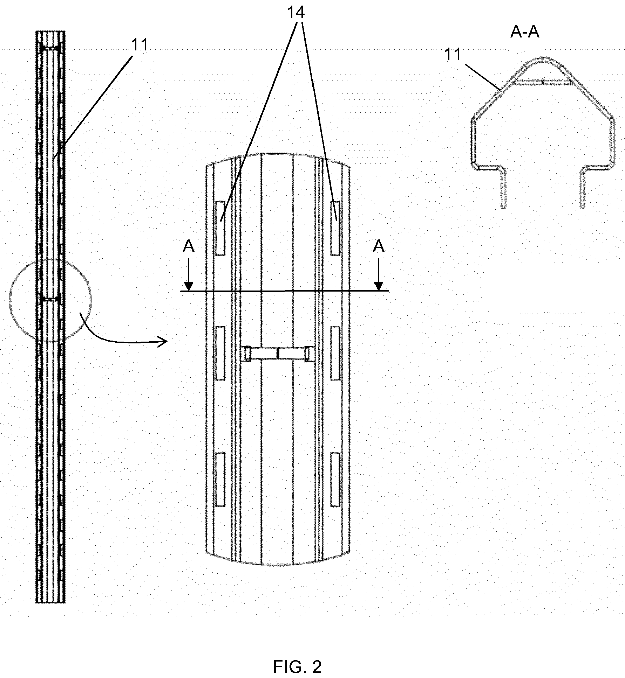

La figure 2 montre un détail de la structure longitudinale 11, en vue de face et en coupe. La structure comprend deux rangées d'ouvertures ayant de préférence une forme allongée 14 dans lesquelles pourront se positionner des ergots de réglage qui font partie des ensembles enrouleur 12 (tels que décrits ultérieurement).

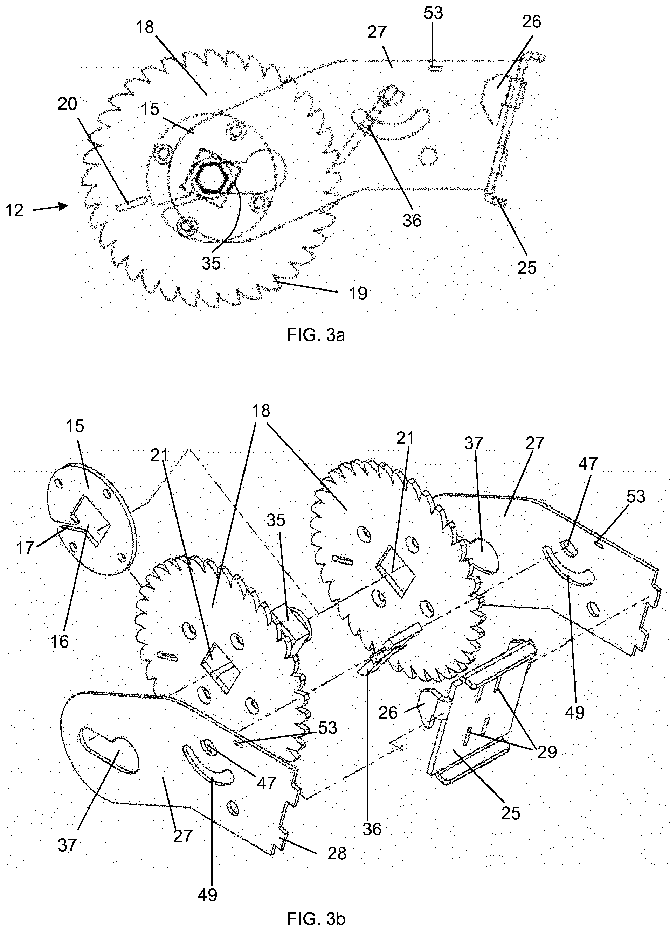

Une forme préférée d'exécution pour un ensemble enrouleur 12 selon l'invention est montrée aux figures 3. La figure 3a montre l'ensemble enrouleur 12 de profil; la figure 3b montre une vue éclatée de l'ensemble enrouleur 12. L'ensemble enrouleur montré aux figures 3 est équipé pour enrouler/dérouler et mettre sous/sans tension un seul fil. L'ensemble comprend un disque central 15, de préférence de forme légèrement ovale ou hélicoïdale.

De préférence, le disque central est pourvu de, au moins, une ouverture centrale 16 de préférence en forme polygonale, de préférence carrée ou hexagonale. Le disque central 15 présente en outre avantageusement une entaille ou une encoche 17 inclinée de préférence avec un angle de 35° à 55° et de préférence avec un angle proche de 45° par rapport à un côté de l'ouverture (carrée) 16, et qui est positionnée spécialement afin de pouvoir recevoir une extrémité du fil et le caler. Ensuite, par la rotation de ce disque central 15, le fil s'enroule sur lui-même en étant parfaitement superposé selon des spires, ce qui évite avantageusement tout effet de croquage ou un coinçage lors des manoeuvres d'enroulement et de déroulement. L'épaisseur du disque central est adéquatement calculée de manière à permettre l'enroulement du fil et est fonction du diamètre de celui-ci avec une tolérance de 0.1 à 0.2 mm.

De préférence, le rayon du disque central est supérieur à 25 mm et de préférence à 30 mm. Cette dimension permet avantageusement de dérouler le fil avec une déformation minimale (sans effet tire-bouchon).

Le disque central 15 est encastré et / ou solidarisé à deux flasques 18. Ces flasques 18 présentent un diamètre nettement plus important que le diamètre du disque central 15 et servent de butées pour le fil. Les flasques maintiennent donc le fil en position enroulée sur le disque central 15.

Avantageusement, chacune des flasques 18 est pourvue de crans 19 qui servent de crans d'arrêt en coopération avec un cliquet de retenue (décrit en détails ultérieurement). Idéalement le nombre de crans 19 est supérieur à 10, supérieur à 20, supérieur à 30, et idéalement de l'ordre de 36 crans d'arrêt.

En outre, il est prévu de disposer au sein même des flasques 18 des lumières de regard 20 afin de pouvoir évaluer rapidement la quantité de fil encore disponible sur l'ensemble enrouleur 12. Les flasques 18 sont pourvues d'ouvertures centrales 21 avantageusement de forme polygonale et de préférence carrée, correspondant à l'ouverture 16 dans le disque central 15, de sorte que l'assemblage des disques 15 et des flasques 18 comprend une seule ouverture centrale avantageusement de forme polygonale et de préférence carrée. Cette ouverture peut bien sur avoir alternativement une autre forme polygonale quelconque. L'assemblage de ces 3 pièces, deux flasques 18 et un disque central 15 peut se faire soit par rivetage, ou par soudure. L'ouverture 16 dans le disque central 15 peut être plus large que l'ouverture 21 dans les deux flasques 18. Les ouvertures 21 dans les flasques 18 sont de préférence équivalentes. Dans l'assemblage des flasques et du disque central, une seule ouverture apparaît donc, ayant les dimensions des ouvertures 21.

L'ensemble enrouleur 12 comprend en outre une plaque de support 25 munie d'ergots 26 de réglage. La plaque de support 25 est dimensionnée pour lui permettre de coulisser au sein de la structure longitudinale 11 du piquet de tête. Les ergots 26 s'insèrent dans les ouvertures allongées 14 prévues dans la structure longitudinale 11 de manière à solidariser de façon amovible l'ensemble enrouleur 12 avec la structure longitudinale 11. La présence d'une pluralité d'ouvertures allongées 14 permet de régler la hauteur de l'ensemble enrouleur 12. Les ergots 26 sont conformés de manière à pouvoir effectuer un déplacement de l'ensemble enrouleur sans utiliser d'outils spécifiques.

Deux plaques de corps 27 sont soudées à la plaque de support 25. La position des plaques de corps est déterminée par la présence de lèvres 28 à l'extrémité des plaques de corps 27 qui s'insèrent dans des ouvertures 29 dans la plaque de support 25 lors de la soudure.

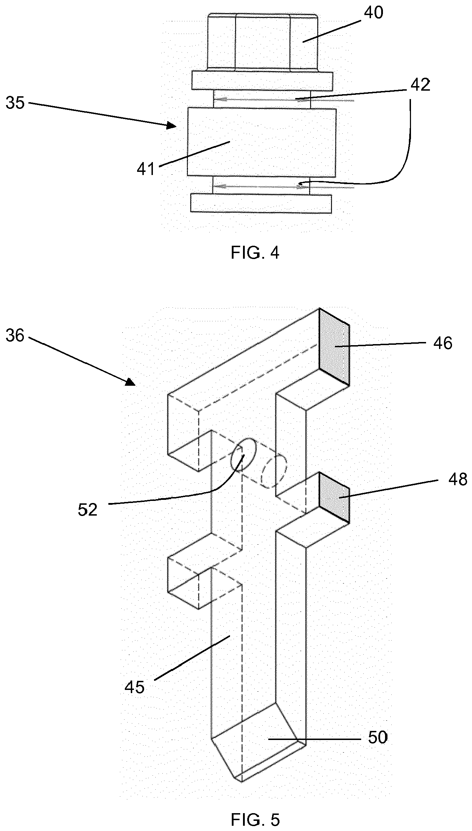

L'ensemble enrouleur 12 est conçu pour recevoir un pivot 35 servant d'axe de rotation, un cliquet de retenue 36 permettant le clipsage des flasques 18 et muni d'un ressort de rappel (non visible sur la figure 3b). De manière particulièrement avantageuse, ces différents éléments sont positionnés et solidarisés entre eux de manière à ce que le montage et le démontage de l'ensemble enrouleur puisse s'effectuer sans l'utilisation d'outils particulier. Avantageusement, une boutonnière 37 est prévue, dans les plaques de corps 27, qui permet de recevoir le pivot 35. Une vue détaillée de l'axe est montrée à la figure 4. Ce pivot présente à une extrémité un usinage 40 pour pouvoir y positionner une clé standard, par exemple une clé de 13 mm. Le corps 41 dudit axe est également avantageusement de forme carrée et pourra s'intégrer dans l'ouverture centrale 16/21 de l'assemblage du disque central 15 et des flasques 18, afin de servir de pivot pour l'assemblage du disque central 15 et des flasques 18. En outre, deux gorges 42 sont usinées afin de pouvoir se glisser dans les plaques de corps 27.

Le cliquet de retenue 36 est représenté en détail à la figure 5. Cet élément comprend une barre centrale 45 qui est longitudinale et deux bras transversaux 46, 48. Le premier bras 46 qui se trouve à l'extrémité de la barre centrale pivote dans deux ouvertures 47 prévues à cet effet dans les plaques de corps 27. Le deuxième bras 48 est guidé dans deux orifices 49 en forme d'arc circulaire dans les plaques de corps 27 de manière à permettre au cliquet un mouvement pivotant limité par les dimensions des orifices 49. L'extrémité distale 50 de la barre centrale 45 est formée de manière effilée de façon à s'engager dans les crans 19 des flasques 18. Un ressort (non représenté) va pousser le cliquet 36 contre les flasques 18 de manière à bloquer en position l'ensemble enrouleur. Le ressort est connecté au cliquet 36 via un trou 52 pourvue dans la barre central 45 du cliquet, et à au moins une des plaques de corps 27 via une boutonnière 53 pourvue dans les plaques de corps 27.

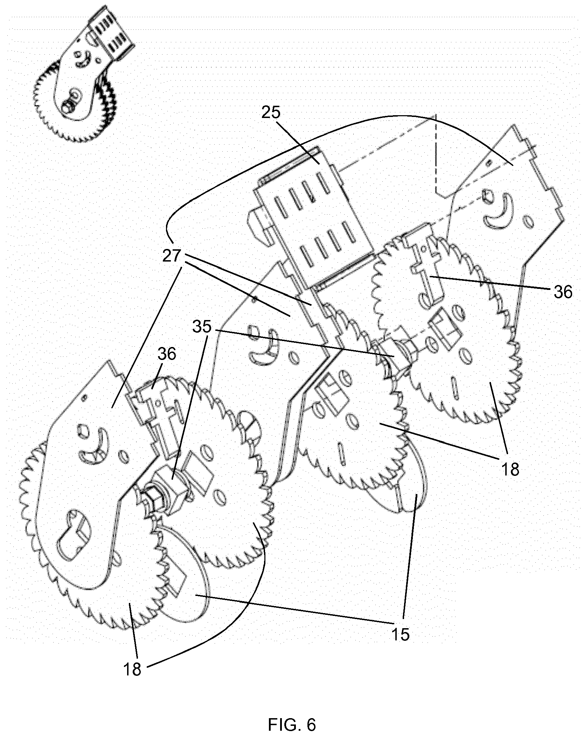

La figure 6 montre un ensemble enrouleur selon l'invention qui est équipé pour maintenir deux fils parallèles. On voit que l'ensemble comprend deux assemblages chacun constitué essentiellement d'un disque central 15 entouré par deux flasques 18, chacun des assemblages étant supporté sur son propre pivot 35 qui est à son tour monté entre deux plaques de corps 27. Un cliquet 36 est pourvu pour chacun des assemblages d'un disque central 15 et deux flasques 18. Les quatre plaques de corps 27 sont soudées sur une seule plaque de support 25.

Chaque ensemble enrouleur 12 est réalisé de manière à permettre l'obtention d'une réserve disponible de fils, de préférence une réserve d'au moins 10 mètres. La réserve est en réalité calculée en fonction du diamètre du fil. En effet, plus un fil est fin, plus la réserve sera importante. Elle peut dans certains cas, pour des fils plus fins, atteindre 15 mètres.

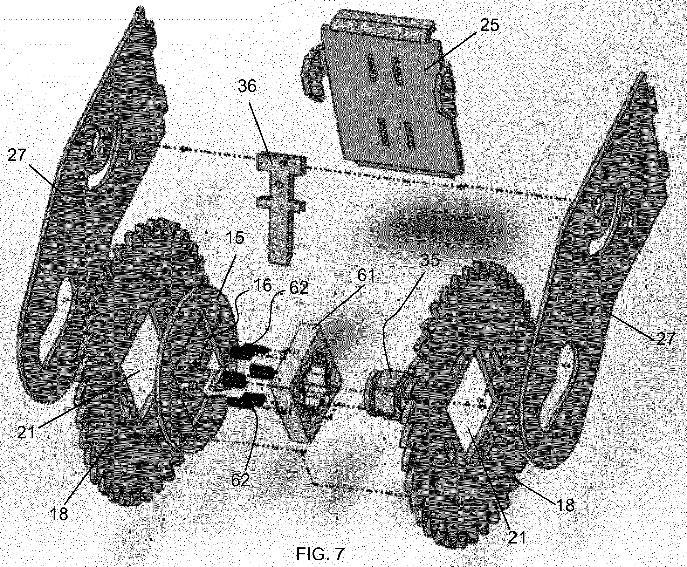

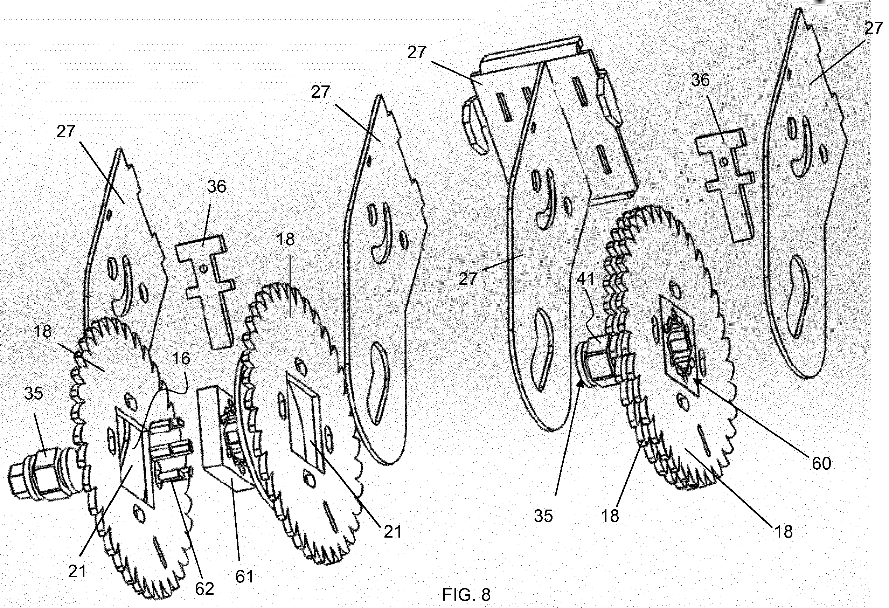

Selon un autre aspect de l'invention, l'ensemble enrouleur 12 est pourvu d'un élément limiteur de tension 60. Les figures 7 et 8 représentent un ensemble enrouleur respectivement pour un seul fil et pour deux fils, pourvu respectivement de un ou deux éléments limiteur de tension selon des formes d'exécution préférées.

Un nombre d'éléments déjà décrits pour les formes d'exécutions précédentes sont visibles à la figure 7 : le disque central 15, les flasques 18, la plaque de support 25 et le cliquet de retenue 36, ainsi que le pivot 35 pourvu de l'usinage 40 pour pouvoir y positionner une clé standard. On y voit également les ouvertures carrées 16 et 21 prévues au centre respectivement du disque central 15 et des flasques 18.

Contrairement aux formes d'exécution précédentes, le pivot 35 ne s'intègre pas directement dans l'ouverture 16/21 de forme polygonale au centre de l'assemblage du disque 15 et des flasques 18. Un élément limiteur de tension 60 est monté dans cette ouverture, le pivot 35 s'intégrant dans cet élément limiteur 60. L'élément 60 comprend un cadre 61 et une pluralité de pièces compressibles 62.

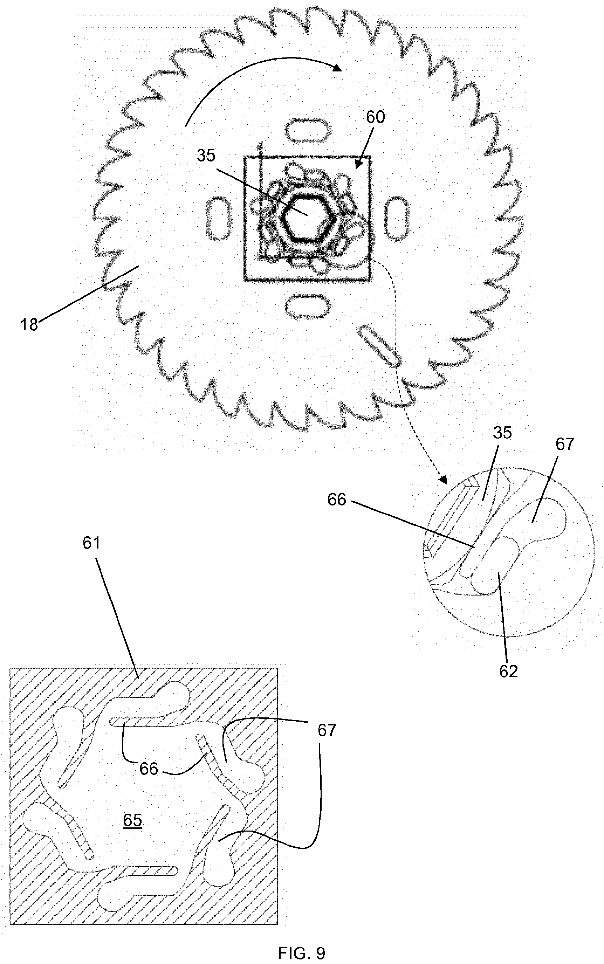

Selon une première forme d'exécution, le cadre 61 est de préférence formé d'un bloc uniforme en un seul matériau, de préférence un matériau synthétique tel qu'un polymère, ayant une épaisseur qui permet au bloc d'actionner en rotation le disque central 15 et les flasques 18. L'élément limiteur de tension 60 interagit avec le pivot 35 qui présente dans ce cas un corps 41 qui a en coupe une forme hexagonale. Le fonctionnement de cet ensemble est expliqué sur base de la figure 9.

La forme du cadre 61 est telle que ce cadre comprend une ouverture centrale 65 de forme essentiellement hexagonale, entourée par six lamelles pliables 66. La flexibilité des lamelles est obtenue par le choix du matériau du cadre ainsi que par la présence d'espaces 67 derrière chacune des lamelles 66 (vu à partir du milieu du cadre 61). Cette forme de l'ouverture 65 permet une déformation réversible des lamelles 66 par pliage vers l'extérieur du cadre, donc vers les espaces 67.

Selon une première forme d'exécution on prévoit, au sein de l'élément limiteur de tension 60 assemblé, des pièces compressibles 62 qui s'intègrent dans les espaces 67, chacune des pièces 62 étant calée entre une lamelle 66 et le paroi de l'espace 67 derrière la lamelle.

Pour enrouler le fil, l'opérateur va faire tourner le pivot 35 dans la direction d'enroulement, indiquée par la flèche à la figure 9. Tant que le fil ne se trouve pas sous tension ou en dessous d'une tension prédéfinie, le corps hexagonal 41 du pivot 35 s'engage dans l'ouverture essentiellement hexagonale définie par les lamelles 66 non-déformées et la rotation du pivot 35 actionne l'enroulement du fil. Au moment où le fil arrive à la tension prédéfinie, l'effort exercé par le pivot 35 va déformer les lamelles 66 par pliage vers l'extérieur, contre leur propre force mécanique et en opposition de la résistance des pièces compressibles 62. Autrement dit, les bords du corps hexagonal du pivot 35 vont comprimer les pièces compressibles 62. Le degré de flexibilité des lamelles 66 et la dureté des pièces 62 sont tels que le pivot 35 perd sa connexion rotative avec le cadre 61. On voit alors que le disque central 15, et le pivot 35 tournent à vide dans l'ensemble, permettant à l'opérateur de constater qu'il a atteint la tension prédéfinie.

La valeur de la tension prédéfinie dépend du matériau et des dimensions du cadre 61 et de la dureté des pièces compressibles 62. Ces paramètres sont choisis et calculés de sorte que la tension limite corresponde à une valeur optimale qui représente ni un état de sous-tension, ni de surtension du fil. Cette forme d'exécution permet donc à l'opérateur de maintenir une tension optimale, tout en utilisant une clé standard pour enrouler les fils.

Les lamelles 66, le cadre 61 et les pièces 62 sont configurés pour permettre une légère surtension du fil à partir de la tension limite, tant que la rotation du pivot 35 se fait lentement. Cette manipulation permet d'enlever le cliquet de retenu 36 avant de dérouler le fil.

Des variantes de l'élément limiteur de tension 60 sont possibles. Par exemple quand le matériau du cadre usiné 61 est plus résistant qu'un polymère, on peut dimensionner les lamelles 66 de sorte que les pièces compressibles 62 ne sont plus indispensables. Par exemple en produisant le bloc en métal, les lamelles 66 (qui se comportent comme des ressorts) ont une résistance plus importante et pourront donc jouer le rôle de limiteur de tension tel que décrit ci-dessus sans l'aide des pièces 62.

Selon la présente invention, on vise à réaliser un système qui permet à l'aide d'un dispositif tel que décrit précédemment de soutenir et maintenir en place des pieds de vigne ou arbres fruitiers. Un exemple de la méthode pour monter le piquet comprend les étapes suivantes :
1- Planter le piquet et placer le ou les haubans arrière.
2- Faire coulisser le premier ensemble enrouleur 12, qui est en général prévu pour un seul fil, jusqu'à la hauteur désirée, le positionner via les ergots 26, prendre une extrémité du fil, l'autre extrémité étant attachée à un piquet (qui peut être un piquet de tête y compris selon l'invention) monté de l'autre côté d'une rangée d'arbres, et le faire glisser entre les deux flasques 18 et le faire entrer dans l'entaille 17 prévue à cet effet, prendre une clé de 13 mm pour faire tourner l'axe 35 et débuter l'enroulement du fil jusqu'à la tension désirée. Le fil est tendu et maintenu en tension via le cliquet de retenue 36.
3- Prendre optionnellement un deuxième enrouleur qui peut être double fil et refaire le même cheminement que précédemment.
4- Prendre optionnellement un troisième enrouleur qui peut être double fil ou simple fil selon les régions et refaire de même.

Lors du débourrement (pousse de la vigne) il est nécessaire de pratiquer le relevage des fils en fonction de la pousse. Pour ce faire, il suffit de prendre la clé de 13 mm, de la placer sur la tête 40 de l'axe de rotation, d'y appliquer une légère pression arrière afin de libérer le cliquet 36, de dégager le cliquet manuellement contre la tension du ressort, et d'ensuite dérouler un peu de fil, prendre avec une main l'ensemble enrouleur 12, le désolidariser et le placer à la nouvelle hauteur désirée. A ce stade, il faut relever manuellement ou mécaniquement les fils sur les piquets intermédiaires de la treille, ensuite venir peaufiner la tension avec la clé.

Lorsqu'un fil est cassé et qu'il faut le rabouter, il suffit de dérouler une quantité nécessaire de fil de l'enrouleur, se rendre à l'endroit de la réparation, réaliser cette dernière, de préférence sans outillage, par exemple en pratiquant une boucle et une torsade du fil sur une extrémité et en passant la deuxième extrémité dans la boucle, et revenir au piquet pour y appliquer la bonne tension.

Après la vendange, il faut redescendre les deux rangées supérieures de fils et les placer au niveau le plus bas, détendre éventuellement les fils pour les laisser pendre au sol, ce qui facilite le travail de la pré-taille ou de la taille, soit manuelle soit mécanisée. Ce travail sur les fils se fait de nouveau avec la seule clé de 13 mm.

Le dispositif de l'invention est prévu pour le passage de différentes machines sans risque pour le piquet et ses enrouleurs et sans risque pour les machines. De plus, si l'utilisateur désire changer de diamètre de fil au cours des années, il lui sera possible de remplacer uniquement l'ensemble enrouleur, par un autre et cela sans matériel adéquat.

Différents traitements contre la corrosion peuvent être appliqués. Avantageusement certaines parties constitutives peuvent être réalisées en acier inoxydable.

Ce dispositif peut être appliqué à l'arboriculture : vu les tensions et tailles des piquets, l'ensemble devra être construit de façon plus robuste.

Il est évident que ce dispositif peut être utilisé dans d'autres fonctions, tel que clôture, lors de l'utilisation de tension de filets de protection anti grêle dans diverses cultures, telles que cultures de la tomate, maraichères, fruitières, viticoles, etc.

## Revendications

1. Dispositif de maintien et support de pieds de vigne ou arbres fruitiers comprenant une structure longitudinale (11) et un ou plusieurs ensembles enrouleur (12) aptes à être déplacés verticalement le long de la structure longitudinale, chaque ensemble enrouleur (12) comprenant au moins une réserve de fil **caractérisée en ce que** chaque ensemble enrouleur (12) comprend au moins les éléments suivants :
- un disque central (15), de préférence de forme hélicoïdale,
- deux flasques (18) se présentant sous la forme de roues crantées, disposées de part et d'autre du disque central (15), de manière à former un assemblage qui sert à recevoir une réserve de fil autour du disque central et de la maintenir en place par les flasques,
- un pivot (35) servant d'axe de rotation audit assemblage,
- un cliquet de retenue (36) de préférence muni d'un ressort, permettant le blocage et le déblocage de l'axe de rotation servant de pivot, par l'interaction entre le cliquet et les crans (20) des flasques (18).

2. Dispositif selon la revendication 1, dans lequel le pivot (35) servant d'axe de rotation est un élément démontable comprenant un usinage (40) à une extrémité qui permet au pivot de tourner, et un corps (41) de forme polygonale correspondant à la forme d'une ouverture (21) dans l'assemblage du disque central (15) et des flasques (18), de sorte que la rotation de l'axe (35) actionne la rotation du disque central (15).

3. Dispositif selon la revendication 1 ou 2, dans lequel le pivot (35) servant d'axe de rotation est de préférence un élément démontable et comprend un usinage (40) à une extrémité qui permet au pivot de tourner, et un corps (41) de forme polygonale, et qui comprend en outre un élément limiteur de tension (60) monté entre le corps du pivot (35) servant d'axe de rotation et l'ouverture (21) présente dans l'assemblage du disque central (15) et des flasques (18).

4. Dispositif selon la revendication 3, dans lequel l'élément limiteur de tension (60) comprend un cadre (61) monté dans l'ouverture (21) dans l'assemblage du disque central (15) et des flasques (18), ledit cadre (61) comprenant une ouverture centrale (65) de forme essentiellement polygonale, les bords de l'ouverture étant formés par une pluralité de lamelles (66) pliables vers l'extérieur du cadre, et dans lequel le corps (41) de forme essentiellement polygonale du pivot (35) servant d'axe de rotation s'intègre dans l'ouverture centrale (65) du cadre (61).

5. Dispositif selon la revendication 4, dans lequel une pluralité de pièces compressibles (62) sont disposées derrière les lamelles, de sorte que le pliage vers l'extérieur des lamelles (66) requiert la compression des pièces compressibles (62).

6. Dispositif selon la revendication 5, dans lequel le cadre (61) comprend une espace (67) derrière chacune des lamelles (66), et dans lequel les pièces compressibles (62) sont calées individuellement entre la lamelle (66) et la paroi de l'espace (67).

7. Dispositif selon l'une quelconque des revendications précédentes, dans lequel le disque central (15) est pourvu d'une entaille (17) qui permet d'insérer l'extrémité du fil.

8. Dispositif selon l'une quelconque des revendications précédentes dans lequel chaque ensemble enrouleur comprend en outre au moins les éléments suivants :
- une plaque de support (25) configurée en vue de permettre sa solidarisation amovible à la structure longitudinale (11),
- au moins deux plaques de corps (27) solidarisées à la plaque de support (25) et configurées pour supporter entre elles l'axe de rotation (35).

9. Dispositif selon la revendication 8, dans lequel les plaques de corps (27) comprennent des boutonnières (37) qui permettent de monter l'axe de rotation (35) entres les plaques de corps.

10. Dispositif selon la revendication 8 ou 9 dans lequel :
- la structure longitudinale (11) présente une partie creuse, apte à recevoir un ou plusieurs ensembles enrouleur (12),
- la plaque de support (25) présente une forme et des dimensions de manière à pouvoir coulisser au sein de la structure longitudinale.

11. Dispositif selon l'une quelconques des revendications 8 à 10, dans lequel le cliquet de retenue (36) comprend une barre longitudinale (45) et deux bras transversaux (46,48), le premier bras (46) transversal étant configuré pour pivoter au sein de deux ouvertures (47) prévues à cet effet dans les plaques de corps (27), le deuxième bras (48) transversal étant configuré pour être guidé dans deux orifices (49) en forme d'arc circulaire, dans les plaques de corps (27), l'extrémité (50) du cliquet étant conformée pour caler sur au moins un des crans (20) des flasques (18).

12. Dispositif selon l'une quelconque des revendications précédentes, dans lequel au moins un des ensembles enrouleur (12) comprend un seul assemblage d'un disque central (15) et deux flasques (18).

13. Dispositif selon l'une quelconque des revendications 1 à 11, dans lequel au moins un des ensembles enrouleur (12) comprend deux assemblages, chacun étant essentiellement constitué d'un disque central (15) et deux flasques (18).
